# EUROPEAN PATENT APPLICATION

(11) **EP 3 901 474 A1**
(43) Date of publication of application: **27.10.2021**
(21) Application number: 21155620.4
(22) Date of filing: 05.02.2021
(51) Int. Cl.: F16B 37/04, F16B 37/02, F16B 37/08, F16B 5/02, F16B 43/00

(54) **WASHER**

(30) Priority: 23.04.2020 EP 20171140
(71) Applicant: Illinois Tool Works INC., Glenview, IL 60025 (US)
(72) Inventor: ELLIS, Richard, Illinois, 60025 (US); COBACHO JORDÁN, Luis, Illinois, 60025 (US)
(74) Representative: HGF

(57) **Abstract**

A washer (1) comprising: a collar (2) defining an aperture (3) through which a longitudinal axis (5) passes; at least one indexing tab (7) extending from the collar into the aperture; and at least two retainers (8) extending from the collar into the aperture and along or at an angle to the longitudinal axis. The retainers are configured to insert into and engage the sidewall of a hole. Each indexing tab is configured to engage the thread of a threaded fastener inserted into the aperture along the longitudinal axis.

## Description

This invention relates generally to a washer for a threaded fastener. More specifically, certain examples of this invention relate to a washer, which is configured to retain a threaded fastener and to engage a hole into which the washer is inserted. In particular examples, a washer may be pushed into and retained within a hole in a first component, and then a threaded fastener may be pushed into and retained within the washer. In particular examples, the threaded fastener may be pushed back through the washer without the washer disengaging the hole in the first component.

### BACKGROUND

A washer is typically a plate with a hole or aperture and is used to distribute the load of a threaded fastener. The term "threaded fastener" is used herein and should be understood to encompass but not be limited to screws and bolts. The plate may be referred to as a collar defining or surrounding the aperture, and may be generally circular or any other shape, for instance square.

In an example, a threaded fastener, particularly a screw, serves to join first and second components by passing through a hole extending through the first component, and which is larger than the threaded diameter of the fastener, before engaging a threaded hole in the second component. The screw may have a head and a washer may be provided about the shaft of the screw, sitting under the screw head. As the screw is tightened to lock the first and second components together, the washer serves to distribute the load from the screw head across a wider area of the first component surrounding the hole.

Washers may also serve to reduce the tendency of a threaded fastener to loosen under vibration. This may be achieved by providing axial flexibility in the collar.

It is known for a washer to retain a threaded fastener which passes through the aperture, for instance by the inclusion of resiliently deformable tabs extending from the collar into the aperture and which deform to admit the insertion of the shaft of the fastener. The tabs bear against and close over the screw thread to resist the shaft being withdrawn through the aperture. If the fastener includes an unthreaded portion of the shaft proximal to a head of the fastener, then the tabs may also close over the unthreaded portion.

In an example application where a threaded fastener is used in combination with a washer to join first and second components, when holes in the first and second components are aligned, the washer and threaded fastener must be manually positioned. Even where a washer which retains a threaded fastener is used, the combination of the fastener and washer must be manually positioned at the time at which the first and second components are aligned. It will be appreciated that this process may be labour intensive. Even where positioning of the fastener and washer is automated, it will be appreciated that this positioning may be time consuming and prone to error.

It would be advantageous to provide an alternative form of washer that reduces time spent positioning fasteners when coupling together components.

### SUMMARY OF THE INVENTION

Accordingly, a first aspect of the invention provides a washer comprising: a collar defining an aperture through which a longitudinal axis passes; at least one indexing tab extending from the collar into the aperture; and at least two retainers extending from the collar into the aperture and along or at an angle to the longitudinal axis; wherein the retainers are configured to insert into and engage with the sidewall of a hole; and wherein each indexing tab is configured to operably engage with the thread of a threaded fastener inserted into the aperture along the longitudinal axis.

Advantageously, because the washer both engages the thread of a threaded fastener and engages the sidewall of a hole, particularly, a sidewall of a hole in a first component, the threaded fastener, washer and first component may be provided as a subassembly. The subassembly may be provided to a production line and aligned with a second component having a corresponding hole, before the threaded fastener is rotationally driven to couple the two components together. This may reduce time spent positioning threaded fasteners and washers on the production line. Accuracy may also be increased by reducing the likelihood of a fastener being omitted or falling out while being driven home.

Advantageously, because the indexing tabs engage the thread of the threaded fastener, the threaded fastener may be pushed into the washer and hence indexed at a required height position. This may reduce time spent on the production line by reducing the required rotation to tighten up the threaded fastener. This may also prevent the threaded fastener protruding too far through the first component, and so avoid the risk of damage to the second component before the hole alignment is complete.

For the avoidance of doubt, any of the features described herein apply equally to any aspect of the invention.

Within the scope of this application, it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

For the avoidance of doubt, the terms "may", "and/or", "e.g.", "for example" and any similar term as used herein should be interpreted as non-limiting such that any feature so-described need not be present. Indeed, any combination of optional features is expressly envisaged without departing from the scope of the invention, whether or not these are expressly claimed. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

Embodiments of the invention will now be described by way of example only with reference to the accompanying drawings in which:
**Figure 1** is a perspective view of a first example of a washer according to the present invention;
**Figure 2** is a cross section view of a washer according to the first example during insertion into a hole;
**Figure 3** is a cross section view of a washer according to the first example fully inserted into a hole;
**Figure 4** is a partial cross section view of a washer according to the first example fully inserted into a hole and a threaded fastener inserted into the washer;
**Figure 5** is a flow chart describing a method of using a washer according to an example of the present invention;
**Figure 6** is a perspective view of a second example of a washer according to the present invention;
**Figure 7** is a partial cross section view of a washer according to the second example fully inserted into a hole and a threaded fastener partially inserted into the washer;
**Figure 8** is a partial cross section view of a washer according to the second example fully inserted into a hole and a threaded fastener engaged in the washer, and
**Figure 9** is a flow chart describing a method of manufacturing a washer according to an example of the present invention.

### DETAILED DESCRIPTION

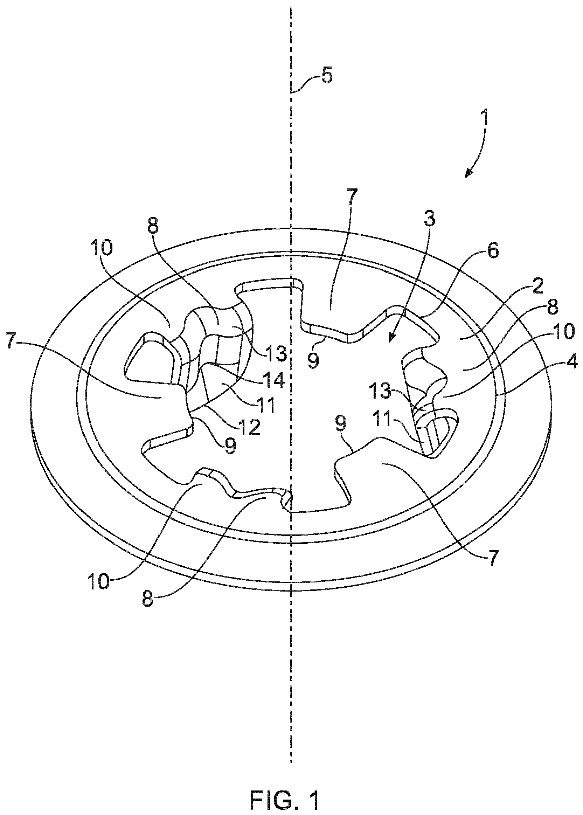

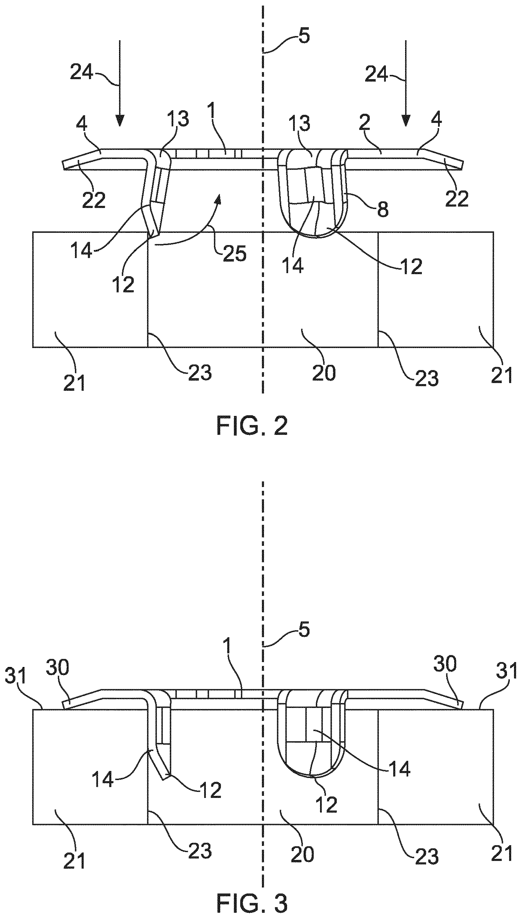

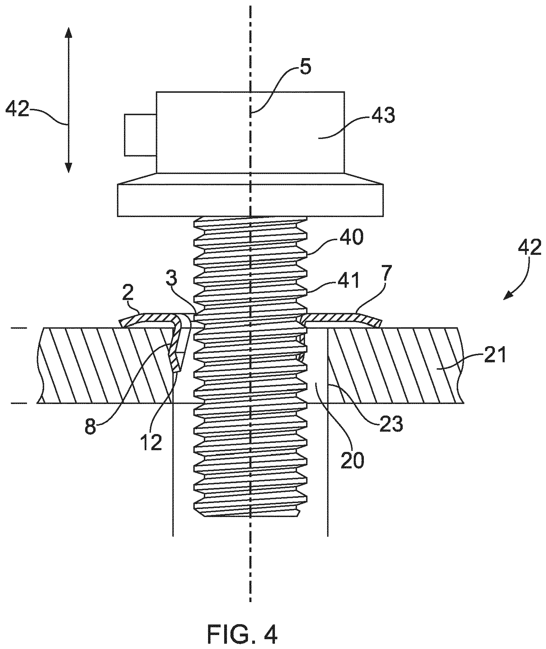

Referring to figure 1, this illustrates a washer 1 according to a first example of the present invention. The washer comprises a collar 2. The collar 2 may alternatively be referred to as a plate or flange. The collar 2 serves to distribute load from a threaded fastener as is described below, particularly with reference to figure 4. In the example of figure 1 the collar 2 is circular, but this is not essential and indeed the outer shape of the collar 2 may be any shape including those conventional for known washers. Within the collar 2 there is provided an aperture 3 (which may alternatively be referred to as a hole). Alternatively, it may be considered that the collar 2 surrounds or defines the aperture 3. The collar 2 may be generally planar, though as described further below in connection with figure 2, a ridge 4 may be formed in the collar 2 such that the collar is dished.

The washer 1 may be defined by a longitudinal axis 5. The longitudinal axis 5 passes through the centre of aperture 3 and the collar 2 extends generally radially from the longitudinal axis 5. The collar 2 including the aperture 3 may be rotationally symmetrical about the longitudinal axis 5. The aperture 3 may be generally circular, and may include circular portions 6, other than for indexing tabs 7 and retainers 8. In the example of figure 1 there are three indexing tabs 7 and three interspersed retainers 8. They may be evenly spaced apart around the periphery of aperture 3, as illustrated. Rotational symmetry of order 3 may be provided, as illustrated. However, in other examples of the present invention there may be different numbers of indexing tabs 7 and retainers 8. There may be at least two of each. There may be four or more. There may be different numbers of indexing tabs 7 and retainers 8.

Indexing tabs 7 extend from the collar 2 into the aperture 3. The indexing tabs 7 may be generally planar with the inner portion of the collar 2. The indexing tabs 7 terminate at faces 9 which are configured to engage the thread of a threaded fastener inserted into the aperture 3 (as illustrated in figure 4). That is, the faces 9 are positioned within the aperture such that in use they make contact with the thread of a threaded fastener when the threaded fastener is pushed into aperture 3, as is illustrated in figure 4. The faces 9, and more generally the indexing tabs 7, engage the screw thread of the threaded fastener to resist movement of the threaded fastener along axis 5, but are configured to deform sufficiently to allow movement along axis 5, if the threaded fastener is pushed further into aperture 3 or pulled out of aperture 1. Faces 9 may be flat: that is the indexing tabs 7 may fall entirely in the plane of the inner portion of collar 2. The thickness of the material forming washer 1, or at least the portion comprising faces 9 of indexing tabs 7 may be selected to conform to the thread depth of a matching threaded fastener. In a further option, faces 9 may be inclined, for instance by a twist or incline applied to the indexing tabs 7, such that the inclination mates with the inclination of a thread of a threaded fastener inserted into aperture 3. This latter option is not illustrated in figure 1.

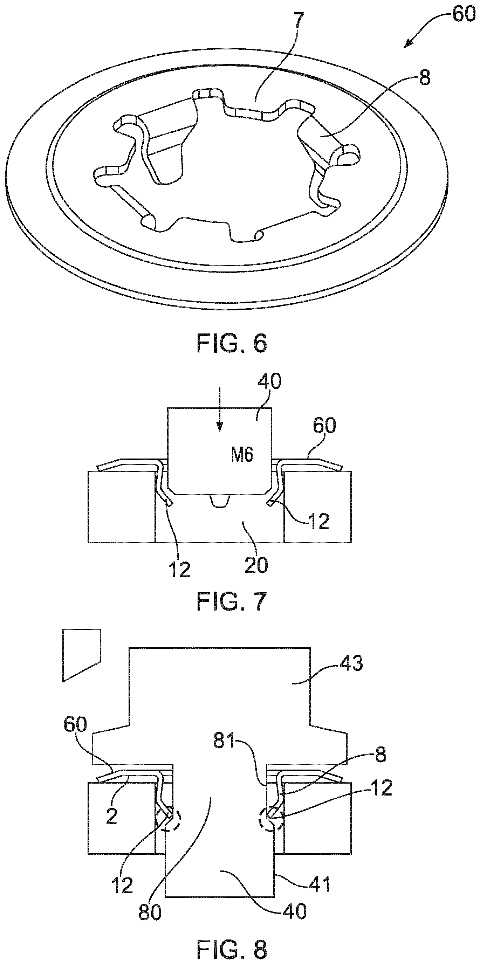

Retainers 8 also extend from the collar 2 into the aperture 3 such that collectively the retainers 8, indexing tabs 7 and circular portions 6 define the shape of the aperture 3. Additionally, as illustrated, the retainers 8 also extend away from collar 2 along or at an angle to the longitudinal axis 5 (downwardly in figure 1, with the dished outer portion of collar 2 - outside of ridge 4 - also projecting downwardly). In the specific example of figure 1, each retainer 8 comprises a first part 10 which extends from collar 2 into aperture 3, generally in the same plane as the inner part of collar 2, and a second part 11 which is bent downwards. As shown, the bend applied to each retainer 8 may cause at least one portion of the retainer 8 to be splayed outwards away from the longitudinal axis 5. That is, the tip 12 of each retainer 8 may be further away from the longitudinal axis 5 than a bent portion 13. Alternatively, as described for a second example washer in connection with figures 6 to 8, the retainers 8 may be generally "S" shaped, with a double curve, such that part of each retainer 8 is further away from the longitudinal axis 5 than the bent portion 13, but the tip 12 is aligned with the bent portion 13 or closer to the longitudinal axis. Each retainer 8 may also have an indentation 14. The indentations 14 may be formed during manufacturing in part to define the curved shape of the retainers 8. The indentations 14 also serve to engage a sidewall of a hole in a first component as will now be described in connection with figures 2 and 3.

Referring now to figure 2, this illustrates a washer 1 according to the example of figure 1 during insertion into a hole 20 formed in a first component 21. Hole 20 may typically be circular in cross section. The cross section of figure 2 reveals the dished form of collar 2: the collar portion 22 outside of ridge 4 is bent downwards. The cross section of figure 2 also further reveals the form of each retainer 8, particularly for the left hand retainer 8 which is shown in cross section: from bent portion 13 the retainer 8 is splayed outwards before curving back towards the longitudinal axis 5 to reach tip 12. Thus, a double curve is formed, at least in part by the indentation 14.

As can be seen in figure 2, in its natural, undeformed state, for a hole 20 appropriately formed for the dimensions of washer 1, the tips 12 fall within sidewall 23 of hole 20, but the outer sides of indentations 14 fall outside of sidewall 23. The retainers 8 may be inserted into hole 20 by downwards pressure applied to collar 2 along the longitudinal axis 5 in the direction of arrows 24. During insertion the retainers 8 are deformed inwards such that tips 12 move towards the longitudinal axis 5 in the direction of arrows 25.

Figure 3 shows the washer 1, particularly retainers 8, fully inserted into hole 20. Deformation of retainers 8 can be observed by comparison of figures 2 and 3, particularly for the left hand retainer 8, which is in cross section. When fully inserted, outer periphery 30 of collar 2 bears against a top surface 31 of first component 21. When fully inserted the outside of indentations 14 bear against sidewall 23 and serve to retain the washer 1 in the hole 20. That is, outwards pressure away from longitudinal axis 5 is brought to bear through indentations 14 against sidewall 20 owing to the resilience of retainers 8. This outwards pressure acts to resist the withdrawal of washer 1 from hole 20. Thus, the retainers 8 may also be referred to as sidewall retainers. The indentations 14 serve to provide a larger, curved contact area between retainers 8 and sidewall 23. This larger contact area may reduce damage caused to the sidewall 23, such as scratching, which might generate debris within hole 20.

Washer 1 may be formed from a suitable material capable of providing the required degree of resilience in retainers 8. For instance, steel or other suitable metals may be used, or alternatively plastics as will be known and available to the person skilled in the art. The degree of outwards pressure applied by retainers 8 may be configured, for a given hole size, by appropriate selection of material and appropriate dimensioning of washer 1, especially retainers 8, including by appropriate selection of the bend shape of each retainer 8. It may be preferred that the outer shape of indentation 14 is chosen to minimise the risk of damage to sidewall 23. Additionally, the pressure applied may be appropriately selected as noted above to provide a required degree of resistance to removal of washer 1 while minimising damage to the sidewall 23.

It will be appreciated that each washer 1 may be configured to fit only a single diameter hole 20. As such if holes of different dimensions are to be fitted with washers then it is necessary that washers are provided in a range of sizes. As one example, a washer 1 according to an example of the present invention may be provided to couple an M6 screw to a 6mm hole. While each washer 1 may be configured to fit a predetermined hole size, of course there is no restriction to only metric hole sizes. In principle there is no restriction to the size of hole and size of corresponding washer 1.

Turning now to figure 4, subsequent to insertion of washer 1 into hole 20, a threaded fastener 40 may be inserted into aperture 3. The tips 12 of retainers 8 may be configured such that they do not make contact with the thread 41 of threaded fastener 40. In another example, tips 12 may make contact with thread 41 and serve to guide insertion of threaded fastener 40. Indexing tabs 7, and particularly faces 9, are configured to engage thread 41. For an appropriately sized combination of washer 1 and threaded fastener 40 the indexing tabs engage thread 41. The threaded fastener 40 may be moved along longitudinal axis 5 without requiring rotation by pushing or pulling the threaded fastener along axis 5 in the direction of arrow 42. That is, while the indexing tabs 7 engage thread 42, the threaded fastener may still move along axis 5. This movement may require the indexing tabs to deform. Accordingly, the indexing tabs 7 provide indexing such that for a washer 1 inserted into hole 20 a threaded fastener 40 may be indexed to any height position along longitudinal axis. Thus, the first component 21, washer 1 and threaded fastener 40 may form a subassembly 42 as shown in figure 4. This subassembly 42 may be provided on a production line as one piece to be aligned with a second component with a corresponding hole (not illustrated) before the threaded fastener 40 is rotationally driven to couple the first and second components together. Figure 4 further shows head 43 which when fully tightened bears against collar 2 such that the washer 1, and particularly collar 2, performs a conventional washer function.

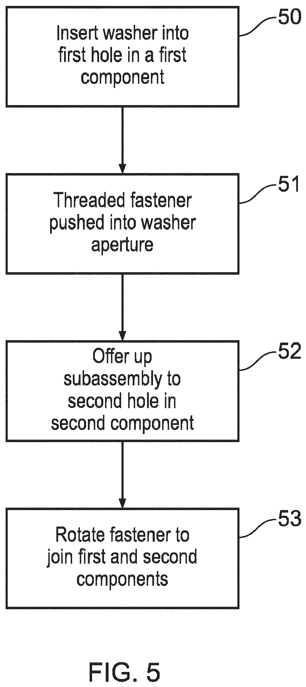

A method of using washer 1 will now be described by reference to the flow chart of figure 5. This method may be performed manually or by machine. Particularly where the method is performed manually, it is desirable that the washer 1 be provided free of any sharp edges, particularly on collar 2 which when inserted into hole 20 projects upwards from first component 21.

At step 50 a washer 1 may be inserted into a first hole in a first component. Particularly, as described above in connection with figures 2 and 3, for a suitably matched pair of hole and washer 1 the retainers 8 may be inserted into the hole such that they flex and grip the sidewall of the hole. Downwards pressure may be applied to the washer 1 along the longitudinal axis 5 until the collar 2 (or the outer rim of the collar if it is dished) is brought to bear against an upper surface of the first component surrounding the hole. The retainers 8 engage the washer 1 to the hole and resist retraction of the washer 1.

At step 51 a threaded fastener is pushed into the washer aperture. The screw thread bears against the indexing tabs 7, but as described above resistance to insertion provided by the indexing tabs 7 may be overcome by insertion pressure applied to the threaded faster. If the threaded fastener is inserted too far into the washer 1, then it may be pulled out of the washer 1. Alternatively, steps 50 and 51 may be reversed so that first the threaded fastener is pushed into the washer 1 and then the washer 1 coupled to the fastener is inserted into the hole. It will be appreciated that a first friction is provided between the washer 1 and the hole, particularly by the retainers 8, and a second friction is provided between the washer 1 and the threaded fastener, particularly by the indexing tabs 7. Preferably, the first friction exceeds the second friction such that, if the threaded fastener is pulled to partially or fully withdraw the threaded fastener from the washer 1, the washer 1 remains engaged in the hole. Appropriate frictions may be designed by selection of the area of contact between the washer 1 and respectively the hole and the threaded fastener, and the pressure applied by the washer 1 at each point.

The method of steps 50 and 51 provides a subassembly of first component, washer 1 and threaded fastener. Subsequently, at step 52, the subassembly may be aligned with a second component with a corresponding second hole. At step 52 if the first and second holes are not exactly aligned, and the threaded fastener protrudes through the first hole, then the threaded fastener may be pushed back through the washer 1. So long as the first friction exceeds the second friction, the washer 1 is retained in the first hole and the subassembly remains complete. This may allow the threaded fastener to self-align in the hole in the second component (particularly if the threaded fastener is provided with a tapered tip) and thus draw the two components together in correct alignment. At step 53 the threaded fastener may be rotationally driven to engage a screw thread formed in the second hole (or the threaded fastener may pass clear through the second hole and be secured with a nut) to join the first and second components together. At step 53 the indexing tabs may be engaged in, and travel along, the thread of the threaded fastener. When fully tightened a head of the threaded fastener bears against the washer. The provision of such a subassembly may make the task of joining together first and second components more efficient.

Referring now to figures 6 to 8, a washer 60 according to a second example of the present application will now be described. Features corresponding to the first example of figures 1 to 4 are identified using the same reference numerals.

Washer 60 differs from washer 1 principally in that four indexing tabs 7 and four retainers 8 are provided interspersed with one another. Washer 60 is presented as an example of how the numbers of indexing tabs 7 and retainers 8 are not fixed. Advantageously, a smaller number such as three, as for the first example, may allow these features to be provided larger and so provide a greater surface area for engaging the screw thread and the sidewall of a hole. Conversely, a larger number of such features may more exactly locate the washer 60 within a hole and a threaded fastener within the washer aperture. Furthermore, as noted above, washers 1, 60 according to the present invention may be provided in different sizes to accommodate holes and threaded fasteners of different sizes. A larger washer 1, 60 may optionally be provided with a larger number of indexing tabs 7 and retainers 8. It is not intended that the example of four shown in figures 6 to 8 be considered to be an upper limit for the number of indexing tabs and retainers. Nor is the example of three shown in figures 1 to 4 considered a lower limit. Nor is it required that the numbers of indexing tabs 7 and retainers 8 be the same, nor that the pattern of how they are distributed about the aperture be as illustrated. An example of a washer 1, 60 in accordance with the present disclosure may have two or more retainers 8 and one or more indexing tab 7. Where only a single indexing tab 7 is provided, it may contact the threaded fastener along a greater proportion of the circumference of the fastener. Additionally, where there is only a single indexing tab 7, the opposite side of the threaded fastener may bear against one or more retainer(s) 8. In certain examples, two or more retainers 8 may support the threaded fastener about its circumference. At least two retainers 8 may be desirable to locate the washer 1, 60 correctly within the hole so that the washer 1, 60 bears against the sidewall of the hole at different points around the circumference of the aperture.

The retainers 8 for the example of the washer 60 shown in figures 6 to 8 differ in those of washer 1 in figures 1 to 4 in that they are formed with a double bend, but without any indentation or embossing. However, it will be appreciated that the retainers 8 of washer 60 may also be indented to provide a larger contact patch with the sidewall of a hole in order to minimise damage or debris generation when the washer is inserted into the hole.

Figure 7 shows the tip of a threaded fastener 40 being inserted into washer 60 and hole 20. This is generally the same as for the example of figure 5 and will not be further described except to note that threaded fastener 40 is engaged at four points about its circumference.

Figure 8 shows threaded fastener 40 fully inserted into washer 60 such that the underside of head 43 is close to and about to bear against collar 2. In the example of figure 8 the shaft 80 of fastener 40 includes a portion 81 without a screw thread. In the example of figures 7 and 8 the tips 12 of retainers 8 bear against thread 41, but when the fastener is fully inserted the tips 12 clear the thread 41 and lie in the unthreaded portion 81. This may serve to resist loosening of fastener 40 by bearing against the interface between threaded portion 41 and unthreaded portion 81. However, it will be appreciated that if the threaded fastener 40 does not include an unthreaded portion, then the retainers 8 and the indexing tabs 7 will instead close over the thread of the fastener.

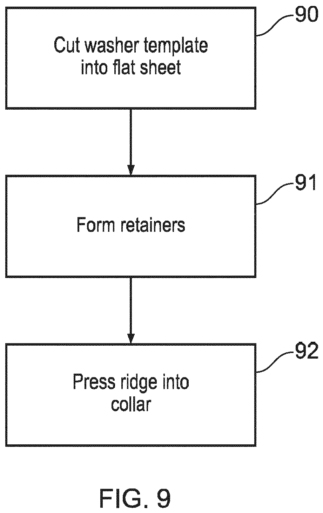

Referring now to figure 9, a method of manufacturing a washer according to an example of the present invention will now be described.

At step 90 a washer template is cut into a flat sheet of material. This may comprise a flat form generally as shown in figures 1 and 6 but without any dishing of the collar 2 and without any bend in the retainers 8.

At step 91 the retainers 8 are formed. This may include forming indentations 14. This may include one or more bend applied to the fastener, either simultaneously or sequentially. This may be of any suitable shape to provide a desired contact pattern with a sidewall 23 of a hole 20.

At step 92 the collar 2 may be pressed to form ridge 4 and to provide the collar 2 as a dished shape.

In order to effectively grip the sidewall of a hole, it is necessary that the retainers 8 be sufficiently stiff to avoid undue flex. This stiffness may be achieved in part through the indentation process described above. Additionally, the dished form of the collar 2 serves to prevent the collar 2 from deforming along with the retainers 8 during insertion into a hole.

As described above, washers 1, 60 according to examples of the present invention may be configured to fit a particular size of hole and a particular size of threaded fastener. The hole and threaded fastener may also be matched in size, as is conventional. In an alternative, a washer 1, 60 according to an example may be arranged to accommodate two or more different sizes of threaded fastener. In this situation the retainers 8 may be configured to fit a hole large enough to receive the maximum diameter of threaded fastener. The indexing tabs 7 may be adapted from that described above such that they can deform to accommodate different size fasteners. As an example, each indexing tab 7 may be bent or inclined downwardly relative to the surrounding collar 2. The resting state of the tabs 7 may be arranged to receive the smallest envisaged fastener. If a larger diameter fastener is provided, then the indexing tabs 7 may deform down and out to admit the larger fastener.

It will be appreciated by those skilled in the art that several variations to the aforementioned embodiments are envisaged without departing from the scope of the invention. It will also be appreciated by those skilled in the art that any number of combinations of the aforementioned features and/or those shown in the appended drawings provide clear advantages over the prior art and are therefore within the scope of the invention described herein.

## Claims

1. A washer comprising:
a collar defining an aperture through which a longitudinal axis passes;
at least one indexing tab extending from the collar into the aperture; and
at least two retainers extending from the collar into the aperture and along or at an angle to the longitudinal axis;
wherein the retainers are configured to insert into and engage the sidewall of a hole; and
wherein each indexing tab is configured to engage the thread of a threaded fastener inserted into the aperture along the longitudinal axis.

2. A washer according to claim 1, comprising at least three indexing tabs and at least three retainers.

3. A washer according to claim 1 or claim 2, wherein the indexing tabs and retainers are interspersed about the periphery of the aperture.

4. A washer according to any one of the preceding claims, wherein the aperture, indexing tabs and retainers are rotationally symmetrical.

5. A washer according to any one of the preceding claims, wherein each retainer is resiliently biased to exert pressure away from the longitudinal axis during insertion into a hole.

6. A washer according to any one of the preceding claims, wherein each retainer comprises a bent portion such that at least part of the retainer is bent out of the plane of the collar surrounding the aperture and splayed outwards from the longitudinal axis.

7. A washer according to any one of the preceding claims, wherein each retainer includes an indentation to generate a sidewall contact pattern in a surface of the retainer facing away from the longitudinal axis.

8. A washer according to any one of the preceding claims, wherein the collar is dished for increased rigidity.

9. A washer according to any one of the preceding claims, wherein each indexing tab terminates in a face configured to mate with the thread of a threaded fastener.

10. A method of using a washer according to claim 1, the method comprising:
inserting the retainers into a first hole in a first component such that the retainers engage the sidewall of the hole; and
inserting a threaded fastener into the aperture such that the thread of the threaded fastener engages each indexing tab so that the threaded fastener is indexed to a required height relative to the washer to form a subassembly comprising the first component, the washer and the threaded fastener.

11. A method of using a washer according to claim 10, further comprising:
aligning the subassembly with a second component including a corresponding second hole; and
rotationally driving the threaded fastener such that the threaded fastener engages a thread in the second hole or a nut to join the first and second component together.

12. A method of manufacturing a washer according to claim 1, the method comprising:
cutting a washer template including collar, indexing tab and retainer portions into a flat sheet of material;
bending each retainer out of the plane of the remainder of the washer; and
pressing the collar to form a dished shape.
